# EUROPÄISCHE PATENTSCHRIFT

(11) **EP 2 879 774 B1**
(45) Veröffentlichungstag und Bekanntmachung des Hinweises auf die Patenterteilung: **16.05.2018**
(21) Anmeldenummer: 13742233.3
(22) Anmeldetag: 30.07.2013
(51) Int. Cl.: B01D 33/21, B01D 33/70, D21D 5/04, B01D 33/72

(54) **SCHEIBENFILTER**
DISC FILTER
FILTRE-PRESSE À PLATEAUX

(30) Priorität: 03.08.2012 DE 102012213769
(43) Veröffentlichungstag der Anmeldung: 10.06.2015
(73) Patentinhaber: Voith Patent GmbH, 89522 Heidenheim (DE)
(72) Erfinder: MANNES, Wolfgang, 88213 Ravensburg-Bavendorf (DE)
(86) Internationale Anmeldenummer: PCT/EP2013/065946
(87) Internationale Veröffentlichungsnummer: WO 2014/020002

(56) Entgegenhaltungen:
- EP-A1- 0 596 856
- WO-A1-96/25218
- DE-A1- 3 942 724
- DE-B1- 2 626 458
- US-A- 5 316 675
- US-A- 5 705 068

## Beschreibung

Die Erfindung betrifft einen Scheibenfilter zur Abtrennung von Flüssigkeiten aus einer Suspension, insbesondere einer Faserstoffsuspension, mit einem Behälter zur Aufnahme der Suspension, einer sich horizontal im Behälter erstreckenden und rotierbar gelagerten Hohlwelle, mehreren senkrecht auf der Hohlwelle befestigten, axial voneinander beabstandeten und flüssigkeitsdurchlässigen Filterscheiben, deren Innenraum mit der Hohlwelle in Verbindung steht, wenigstens einem Einlauf für die Suspension sowie zwischen den Filterscheiben angeordnete Stoffausläufe.
Derartige Scheibenfilter werden zur Eindickung der Suspension und in der Papierindustrie insbesondere zur Faserstoffrückgewinnung eingesetzt und sind beispielsweise in der WO 96/252 18 A1 sowie der EP 0 596 856 A1 beschrieben. Hierzu ist die Hohlwelle in der Regel mit einer Unterdruckquelle verbunden. Auf den Filterscheiben bildet sich infolge des Druckunterschieds zwischen der Faserstoffsuspension und dem Innenraum der Filterscheiben eine Vliesschicht. Beim Eintauchen der Filterscheiben in die Faserstoffsuspension gelangt so weitestgehend nur Wasser in den Innenraum der Filterscheiben und damit die Hohlwelle.
Die Vliesschicht wird beim Auftauchen über Schaber entfernt und zum entsprechenden Stoffauslauf geführt oder mit Wasser in den Stoffauslauf gespritzt.
Bei hohen Stoffdichten der zugeführten Suspension kann es dabei allerdings leicht zu einer zur starken Eindickung des Stoffes kommen. Dies führt dann dazu, dass die Vliesschicht von den rotierenden Filterscheiben abgeschert wird, was die Qualität des Filtrats beeinträchtigt.
Die Aufgabe der Erfindung ist es daher die mögliche Stoffdichte der zu behandelnden Suspension ohne wesentliche Beeinträchtigung des Betriebs des Scheibenfilters zu erhöhen.

Erfindungsgemäß wurde die Aufgabe dadurch gelöst, dass die Suspension über einen oder mehrere Einläufe mit einer Einströmgeschwindigkeit beim Eintritt in den Behälter von mehr als 1,5 m/s, vorzugsweise mehr als 3 m/s und insbesondere mehr als 6 m/s in die Suspension des Behälters eingebracht wird.
Die erhöhte Einströmgeschwindigkeit führt zur Bildung von Turbulenzen und Strömungen an der Suspensions-Oberfläche sowie innerhalb der Suspension im Behälter, was deren Eindickung entgegenwirkt.
Durch diese relativ einfache Maßnahme kann die Stoffdichte der zugeführten Suspension auf mehr als 2% gesteigert werden.

Um die Vliesschicht der Filterscheiben infolge der intensiveren Einströmung nicht zu beeinträchtigen, sollte die Einströmrichtung der Suspension mit der Wand des Behälters einen Winkel zwischen 0 und 45°, vorzugsweise zwischen 0 und 20° bilden und/oder die Einströmung der Suspension im Bereich zwischen den Filterscheiben und der Wand des Behälters erfolgen.

Je nach Konstruktion des Behälters und der Art der Einströmung kann es von Vorteil sein, dass die Einströmrichtung der Suspension eine senkrecht nach unten oder aber nach oben gerichtete Richtungskomponente aufweist.
Allerdings ist es wegen der höheren Gefahr einer Eindickung vorteilhaft, wenn die Einläufe auf der Seite des Behälters angeordnet sind, aus der die Filterscheiben aus der Suspension auftauchen.

Die Einströmung nach unten lässt sich konstruktiv einfach gestalten, indem die Suspension vom Einlauf über einen Überlauf in die Suspension des Behälters geführt wird. Hierbei sollte zur Gewährleistung der erhöhten Einströmgeschwindigkeit die Höhendifferenz zwischen Überlauf und Suspensionspegel im Behälter mindestens 12 cm, vorzugsweise zumindest 45 cm und insbesondere wenigstens 180 cm
betragen. Im Fall eines Überlaufs kann der Einlauf von einem, vor dem Überlauf angeordneten, offenen Behälter gebildet werden.

Ergänzend oder alternativ kann der Einlauf auch von einer oder mehreren in die Suspension des Behälters gerichteten Düsen gebildet werden. Diese Düsen können unterschiedlich oder gleich ausgerichtet sein und bezüglich des Umfangs der Filterscheiben an den gleichen oder unterschiedlichen Orten axial nebeneinander sowie über oder unterhalb des Suspensionspegels angeordnet sein.
Dabei hängt die Wahl der Anordnung und Ausrichtung im Wesentlichen von der Konstruktion des Behälters, dessen Dimensionierung sowie der Stoffdichte ab.

Alternativ oder ergänzend kann die erfindungsgemäße Aufgabe auch dadurch gelöst werden, dass ein Teil der Suspension über einen oder mehrere Abläufe des Behälters abgeführt und über einen oder mehrere Einläufe wieder in den Behälter zurückgeführt wird.
Hierbei ist es von Vorteil, wenn zumindest 10%, vorzugsweise wenigstens 20% und insbesondere mehr als 50% der über den bzw. die Einläufe zugeführten Suspension über einen oder mehrere Abläufe des Behälters abgeführt und über die Einläufe wieder in den Behälter zurückgeführt wird.
Diese Rezirkulation hat eine Mindestströmung im Behälter zur Folge, was sehr effizient einer zu starken Eindickung der Suspension entgegenwirkt. Um die Strömungsausbildung zu unterstützen, sollten die Abläufe möglichst weit von den Einläufen entfernt, insbesondere an der gegenüberliegenden Seitenwand des Behälters angeordnet sein.
Außerdem hat es sich aus gleichem Grund als vorteilhaft erwiesen, wenn die Abläufe nahe am Suspensionspegel des Behälters, vorzugsweise mit einem Abstand im Bereich zwischen 10 und 70 cm zum Suspensionspegel angeordnet sind.

Nachfolgend soll die Erfindung an einem Ausführungsbeispiel näher erläutert werden.

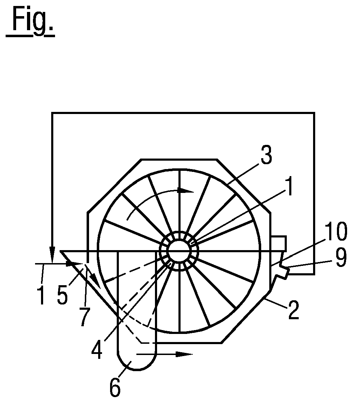

In der beigefügten Zeichnung zeigt die Figur einen schematischen Querschnitt durch unterschiedlich ausgeführte Scheibenfilter.

Die Faserstoffsuspension 1 wird dabei über einen Einlauf 5 in den Behälter 2 des Scheibenfilters geleitet. Im Behälter 2 befindet sich eine horizontal verlaufende und rotierbar gelagerte Hohlwelle 4 mit mehreren axial voneinander beabstandeten Filterscheiben 3.

Die Filterscheiben 3 werden von jeweils zwei scheibenförmigen, perforierten Filterelementen mit gewellter Oberfläche gebildet, die den Innenraum der Filterscheibe 3 begrenzen.

Um das Wasser aus der Suspension 1 abziehen zu können, steht die mit einer Unterdruckquelle verbundene Hohlwelle 4 mit dem Innenraum der Filterscheiben 3 in Verbindung.
Die sich dabei an den Filterelementen bildende Vliesschicht wird nach dem Auftauchen aus der Suspension 1 in den Stoffauslauf 6 befördert.

Hierzu befinden sich die Stoffausläufe 6 jeweils zwischen zwei benachbarten Filterscheiben 3.

Um mit dem Scheibenfilter Suspensionen 1 mit höherer Stoffdichte von über 2% oder sogar über 3% behandeln zu können, wird die Suspension 1 mit einer Einströmgeschwindigkeit von mehr als 1,5 m/s in die, im Behälter 2 vorhandene Suspension 1 eingebracht. Dies erzeugt Turbulenzen und Strömungen im Behälter 2, was der Eindickung entgegenwirkt.

Die zu behandelnde Suspension 1 wird von einem Einlauf 5 in Form einer oder mehrerer axial nebeneinanderliegender Düsen direkt in die Suspension 1 im Behälter 2 eingedüst. Diese Eindüsung erfolgt hier in der Nähe des Suspensionspegels von oben nach unten entgegen der Rotationsrichtung der Filterscheiben 3.
Die Eindüsung entgegen der Rotationsrichtung sorgt für eine zusätzliche Verwirbelung. Dabei erfolgt die Eindüsung in den Bereich zwischen Filterscheibe 3 und der Seitenwand des Behälters 2, wobei die Einströmrichtung 7 der Suspension 1 mit der Wand des Behälters 2 einen Winkel von weniger als 20° bildet.

Um noch mehr Dynamik in die Suspension 1 des Behälters 2 zu bringen, wird ein Teil der Suspension 1 über einen oder mehrere Abläufe 9 des Behälters 2 abgeführt und über eine Rücklaufleitung und einen oder mehrere Einläufe 5 wieder in den Behälter 2 zurückgeführt. Dies ermöglicht die Behandlung von Suspensionen 1 mit sehr hoher Stoffdichte.
Damit sich hierbei umfassende Strömungen in der Suspension 1 des Behälters 2 entwickeln können, sind die Abläufe 9 möglichst weit von den Einläufen 5 entfernt, idealerweise gegenüberliegend vorgesehen.

Die Figur zeigt eine Variante, bei der die Suspension 1 des Behälters 2 über einen Überlauf 10 von einer Rinne getrennt ist, aus der die Suspension 1 über nur einen Ablauf 9 abgeführt werden kann.

Die erhöhte Einströmgeschwindigkeit und die Rezirkulation sind zwei unabhängige Lösungen, die bei einem Scheibenfilter auch allein realisiert werden können.

## Patentansprüche

1. Verfahren zur Abtrennung von Flüssigkeiten aus einer Faserstoffsuspension, mit einem Scheibenfilter umfassend einen Behälter (2) zur Aufnahme der Suspension (1), eine sich horizontal im Behälter (2) erstreckende und rotierbar gelagerte Hohlwelle (4), mehrere senkrecht auf der Hohlwelle (4) befestigte, axial voneinander beabstandete und flüssigkeitsdurchlässige Filterscheibe (3), deren Innenraum mit der Hohlwelle (4) in Verbindung steht, wenigstens einen Einlauf (5) für die Suspension (1) sowie zwischen den Filterscheiben (3) angeordnete Stoffausläufe (6), **dadurch gekennzeichnet, dass** die Suspension (1) mit einer Stoffdichte von mehr als 2% über einen oder mehrere Einläufe (5) mit einer Einströmgeschwindigkeit von mehr als 3 m/s in die Suspension (1) des Behälters (2) eingebracht wird und die Einläufe (5) auf der Seite des Behälters (2) liegen, aus der die Filterscheiben (3) aus der Suspension (1) auftauchen.

2. Verfahren nach Anspruch 1, **dadurch gekennzeichnet, dass** die Suspension (1) über einen oder mehrere Einläufe (5) mit einer Einströmgeschwindigkeit von mehr als 6 m/s in die Suspension (1) des Behälters (2) eingebracht wird.

3. Verfahren nach Anspruch 1 oder 2, **dadurch gekennzeichnet, dass** die Einströmrichtung (7) der Suspension (1) mit der Wand des Behälters (2) einen Winkel zwischen 0 und 45°, vorzugsweise zwischen 0 und 20° bildet.

4. Verfahren nach einem der vorhergehenden Ansprüche, **dadurch gekennzeichnet, dass** die Einströmung der Suspension (1) im Bereich zwischen den Filterscheiben (3) und der Wand des Behälters (2) erfolgt.

5. Verfahren nach einem der vorhergehenden Ansprüche, **dadurch gekennzeichnet, dass** die Einströmrichtung (7) der Suspension (1) eine senkrecht nach unten gerichtete Richtungskomponente aufweist.

6. Verfahren nach Anspruch 5, **dadurch gekennzeichnet, dass** die Suspension (1) vom Einlauf (5) über einen Überlauf (8) in die Suspension (1) des Behälters (2) gelangt, wobei der Niveauunterschied zwischen Überlauf (8) und Suspensionspegel im Behälter (2) mindestens 12 cm, vorzugsweise zumindest 45 cm und insbesondere wenigstens 180 cm beträgt.

7. Verfahren nach einem der Ansprüche 1 bis 4, **dadurch gekennzeichnet, dass** die Einströmrichtung (7) der Suspension (1) eine senkrecht nach oben gerichtete Richtungskomponente aufweist.

8. Verfahren nach Anspruch 5 oder 7, **dadurch gekennzeichnet, dass** der Einlauf (5) von einer oder mehreren in die Suspension (1) des Behälters (2) gerichteten Düsen gebildet wird.

9. Verfahren nach einem der vorhergehenden Ansprüche, **dadurch gekennzeichnet, dass** ein Teil der Suspension (1) über einen oder mehrere Abläufe (9) des Behälters (2) abgeführt und über einen oder mehrere Einläufe (5) wieder in den Behälter (2) zurückgeführt wird.

10. Verfahren nach Anspruch 9, **dadurch gekennzeichnet, dass** wenigstens 10%, vorzugsweise zumindest 20% und insbesondere mehr als 50% der über den Einlauf (5) zugeführten Suspension (1) über ein oder mehrere Abläufe (9) abgeführt und wieder zurückgeführt wird.

11. Verfahren nach Anspruch 9 oder 10, **dadurch gekennzeichnet, dass** die Abläufe (9) möglichst weit von den Einläufen (5) entfernt sind.

12. Verfahren nach einem der Ansprüche 9 bis 11, **dadurch gekennzeichnet, dass** die Abläufe (9) nahe am Suspensionspegel des Behälters (2), vorzugsweise mit einem Abstand im Bereich zwischen 10 und 70 cm zum Suspensionspegel angeordnet sind.

## Claims

1. Method for separating liquids out of a fibrous suspension, using a disc filter comprising a container (2) for holding the suspension (1), a hollow shaft (4) extending horizontally in the container (2) and rotatably mounted, a plurality of liquid-permeable filter discs (3) which are fixed vertically on the hollow shaft (4), are axially spaced apart from one another and the interior of which is connected to the hollow shaft (4), at least one inlet (5) for the suspension (1) and stock outlets (6) arranged between the filter discs (3), **characterized in that** the suspension (1) is introduced into the suspension (1) in the container (2) with a consistency of more than 2% via one or more inlets (5) with an inward flow velocity of more than 3 m/s, and the inlets (5) are located on the side of the container (2) from which the filter discs (3) emerge from the suspension (1).

2. Method according to Claim 1, **characterized in that** the suspension (1) is introduced into the suspension (1) in the container (2) via one or more inlets (5) with an inward flow velocity of more than 6 m/s.

3. Method according to Claim 1 or 2, **characterized in that** the inward flow direction (7) of the suspension (1) forms an angle between 0 and 45°, preferably between 0 and 20°, with the wall of the container.

4. Method according to one of the preceding claims, **characterized in that** the inward flow of the suspension (1) takes place in the region between the filter discs (3) and the wall of the container (2) .

5. Method according to one of the preceding claims, **characterized in that** the inward flow direction (7) of the suspension (1) has a directional component directed vertically downwards.

6. Method according to Claim 5, **characterized in that** the suspension (1) passes from the inlet (5) via an overflow (8) into the suspension (1) in the container (2), wherein the difference in the level between overflow (8) and suspension level in the container (2) is at least 12 cm, preferably at least 45 cm and in particular at least 180 cm.

7. Method according to one of Claims 1 to 4, **characterized in that** the inward flow direction (7) of the suspension (1) has a directional component directed vertically upwards.

8. Method according to Claim 5 or 7, **characterized in that** the inlet is formed by one or more nozzles directed into the suspension (1) in the container (2) .

9. Method according to one of the preceding claims, **characterized in that** some of the suspension (1) is removed from the container (2) via one or more outlets (9) and is fed back into the container (2) again via one or more inlets (5).

10. Method according to Claim 9, **characterized in that** at least 10%, preferably at least 20% and in particular more than 50%, of the suspension (1) fed in via the inlet (5) is removed via one or more outlets (9) and fed back again.

11. Method according to Claim 9 or 10, **characterized in that** the outlets (9) are as far as possible from the inlets (9).

12. Method according to one of Claims 9 to 11, **characterized in that** the outlets (9) are arranged close to the suspension level in the container (2), preferably at a distance in the range between 10 and 70 cm from the suspension level.

## Revendications

1. Procédé de séparation de liquides à partir d'une suspension fibreuse, comprenant un filtre à disques comprenant un récipient (2) pour recevoir la suspension (1), un arbre creux (4) s'étendant horizontalement dans le récipient (2) et supporté de manière rotative, plusieurs disques de filtre (3) fixés sur l'arbre creux (4), espacés axialement les uns des autres et perméables aux liquides, dont l'espace interne est en liaison avec l'arbre creux (4), au moins une entrée (5) pour la suspension (1) ainsi que des sorties de matière (6) disposées entre les disques de filtre (3), **caractérisé en ce que** la suspension (1) est introduite avec une consistance supérieure à 2 % par le biais d'une ou plusieurs entrées (5) avec une vitesse d'afflux supérieure à 3 m/s dans la suspension (1) du récipient (2) et les entrées (5) sont situées du côté du récipient (2) depuis lequel les disques de filtre (3) émergent hors de la suspension (1).

2. Procédé selon la revendication 1, **caractérisé en ce que** la suspension (1) est introduite par le biais d'une ou plusieurs entrées (5) à une vitesse d'afflux supérieure à 6 m/s dans la suspension (1) du récipient (2).

3. Procédé selon la revendication 1 ou 2, **caractérisé en ce que** la direction d'afflux (7) de la suspension (1) forme avec la paroi du récipient (2) un angle compris entre 0 et 45°, de préférence compris entre 0 et 20°.

4. Procédé selon l'une quelconque des revendications précédentes, **caractérisé en ce que** l'afflux de la suspension (1) se produit dans la région entre les disques de filtre (3) et la paroi du récipient (2) .

5. Procédé selon l'une quelconque des revendications précédentes, **caractérisé en ce que** la direction d'afflux (7) de la suspension (1) présente une composante directionnelle orientée verticalement vers le bas.

6. Procédé selon la revendication 5, **caractérisé en ce que** la suspension (1) parvient depuis l'entrée (5) par le biais d'un débordement (8) dans la suspension (1) du récipient (2), la différence de niveau entre le débordement (8) et le niveau de la suspension dans le récipient (2) étant d'au moins 12 cm, de préférence d'au moins 45 cm et en particulier d'au moins 180 cm.

7. Procédé selon l'une quelconque des revendications 1 à 4, **caractérisé en ce que** la direction d'afflux (7) de la suspension (1) présente une composante directionnelle orientée perpendiculairement vers le haut.

8. Procédé selon la revendication 5 ou 7, **caractérisé en ce que** l'entrée (5) est formée par une ou plusieurs buses orientées dans la suspension (1) du récipient (2) .

9. Procédé selon l'une quelconque des revendications précédentes, **caractérisé en ce qu'**une partie de la suspension (1) est évacuée par le biais d'une ou plusieurs sorties (9) du récipient (2) et est réacheminée dans le récipient (2) par le biais d'une ou plusieurs entrées (5).

10. Procédé selon la revendication 9, **caractérisé en ce qu'**au moins 10 %, de préférence au moins 20 %, et en particulier plus de 50 % de la suspension (1) acheminée par le biais de l'entrée (5) sont évacués et à nouveau réacheminés par le biais d'une ou plusieurs sorties (9).

11. Procédé selon la revendication 9 ou 10, **caractérisé en ce que** les sorties (9) sont éloignées le plus possible des entrées (5).

12. Procédé selon l'une quelconque des revendications 9 à 11, **caractérisé en ce que** les sorties (9) sont disposées à proximité du niveau de la suspension du récipient (2), de préférence à une distance dans la plage comprise entre 10 et 70 cm du niveau de la suspension.
